Europäisches Patentamt

European Patent Office

Office européen des brevets

(11) Veröffentlichungsnummer: **0 456 992 A2**

## (12) EUROPÄISCHE PATENTANMELDUNG

(21) Anmeldenummer: **91104407.1**

(22) Anmeldetag: **21.03.91**

(51) Int. Cl.5: **B29C 47/40**, B29C 47/64

(30) Priorität: **17.05.90 DE 4015814**

(43) Veröffentlichungstag der Anmeldung:
**21.11.91 Patentblatt 91/47**

(84) Benannte Vertragsstaaten:
**CH DE FR GB LI**

(71) Anmelder: **HERMANN BERSTORFF
Maschinenbau GmbH
An der Breiten Wiese 3/5
W-3000 Hannover 61(DE)**

(72) Erfinder: **Voigt, Jürgen, Dipl.-Ing.
Habichtstr. 11
W-3101 Wathlingen(DE)**

(54) **Extruder mit gegenläufigen Schneckensegmenten in der Ausstosszone.**

(57) Ein Extruder zur Verarbeitung von thermoplastischem Kunststoff und Kautschuk verfügt im Ausstoßzonegehäuseteil über eine Schneckenhülse, die auf einer Lagerwelle um ihre Längsrichtung drehbar angeordnet und von einer Extruderschnecke gegenläufig und den Förderdruck erhöhend antreibbar ist.

Fig.1

Rank Xerox (UK) Business Services

EP 0 456 992 A2

Die Erfindung betrifft einen Extruder zur Verarbeitung von thermoplastischem Kunststoff und Kautschuk gemäß dem Oberbegriff des Anspruchs 1.

In einem solchen Extruder wird der in der Regel feste Ausgangsstoff in eine Schmelze überführt, wobei materialspezifische Druck- und Temperaturobergrenzen nicht überschritten werden dürfen, will man eine Qualitätsschädigung des Extrudats vermeiden. Häufig liegt daher die Schmelze in der Ausstoßzone des Extruders unter einem Druck vor, der eine nur unbefriedigende Ausstoßleistung erlaubt. Eine Schmelzepumpe, die zwischen der Ausstoßzone des Extruders und dem Extrusionskopf angeordnet ist, gestatten eine Druckerhöhung und damit eine größere Ausstoßleistung.

Zu der häufigsten Bauart einer Schmelzenpumpe gehört die Zahnradpumpe, wie sie beispielsweise aus der DE-OS 38 42 988 bekannt ist. Sie findet vor allem wegen ihrer vergleichsweise guten Förderwirkung Anwendung.

Nachteilig bei der Verwendung einer Zahnradpumpe ist, daß diese ein vergleichsweise teures Bauteil darstellt und außerdem die Baulänge des Extruders verlängert.

Als unvorteilhaft wird außerdem empfunden, daß Zahnradpumpen mit einem eigenen Antrieb versehen werden müssen, dessen Drehzahl in Abhängigkeit von der Förderschneckendrehzahl zu steuern ist. Zudem ist für den Extrusionsprozeß zu beachten, daß mit einer Schmelzepumpe zusätzliche Energie in die Schmelze eingebracht wird. Um ein Überhitzen und damit eine Schädigung der Schmelze zu vermeiden, darf die Schmelzetemperatur eine bestimmte Grenztemperatur nicht überschreiten, was ein aufwendiges Meß- und Regelsystem für den Bereich der Förderschnecken und der Zahnradpumpe erfordert.

Der Erfindung liegt daher die Aufgabe zugrunde, einen Extruder der eingangs genannten Art vorzuschlagen, mit dem ein Druckaufbau im Bereich der Ausstoßzone mit geringerem technischen Aufwand und mit geringerer Extruderbaulänge möglich ist.

Diese Aufgabe wird durch die Merkmale im kennzeichnenden Teil des Anspruchs 1 gelöst. Eine weitere Lösungsmöglichkeit ist im Anspruch 2 dargestellt. Weiterbildungen und vorteilhafte Ausgestaltungen der Erfindung sind den Unteransprüchen entnehmbar.

Dieser Extruder verfügt mit seinen in der Ausstoßzone des Extrudergehäuses angeordneten gegenläufigen Schneckensegmenten über eine sehr vorteilhafte Schmelzepumpe. Mit ihrer Hilfe kann der Förderdruck wegen des gegenüber gleichläufigen Schnecken besseren Förderwirkungsgrades erhöht werden, ohne daß ein für die Schmelze schädlicher und unnötig hoher Energieeintrag stattfindet.

Zudem ermöglicht der im Vergleich zur Förderwirkung eines konventionellen Extruders mit Zahnrad-Schmelzepumpe weitgehend gleichartige Materialtransport durch die Schneckensegmente in der Ausstoßzone eine schonendere Behandlung der an sich in in diesem Extruderbereich schon vollständig aufgeschlossenen Schmelze.

Weitere Vorteile des hier vorgestellten Extruders sind, daß kein separater Antrieb für die Schmelzepumpe benötigt wird, und daß das aufwendige Meß- und Regelsystem zur Steuerung der Schmelzepumpendrehzahl entfällt.

Da die Schneckenhülse sowie das in der Ausstoßzone angeordnete Segment der Extruderschnecke abziehbar mit dem Extrudergehäuse bzw. der oder den Extruderschnecken verbunden ist, kann in Abhängigkeit von vorgegebenen Nutzungskriterien der Extruder mit oder ohne gegenläufigen Schneckensegmenten in der Ausstoßzone betrieben werden.

Anhand der Zeichnung lassen sich Ausführungsbeispiele der Erfindung erläutern.

Es zeigen:

Fig. 1 eine Draufsicht auf ein aufgeschnittenes Gehäuse eines Zweischneckenextruders im Bereich der Ausstoßzone.

Fig. 2 eine Draufsicht auf ein aufgeschnittenes Gehäuse eines Einschneckenextruders im Bereich der Ausstoßzone.

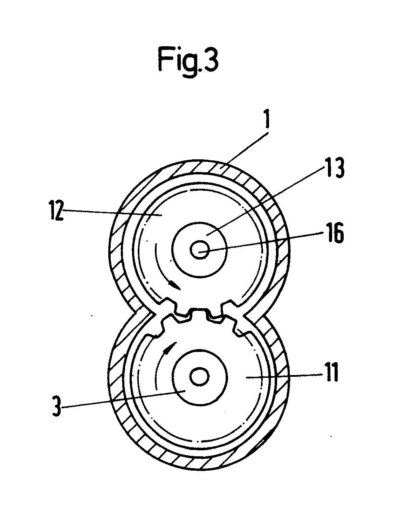

Fig. 3 einen Schnitt entlang der Linie AA gemäß Fig. 1.

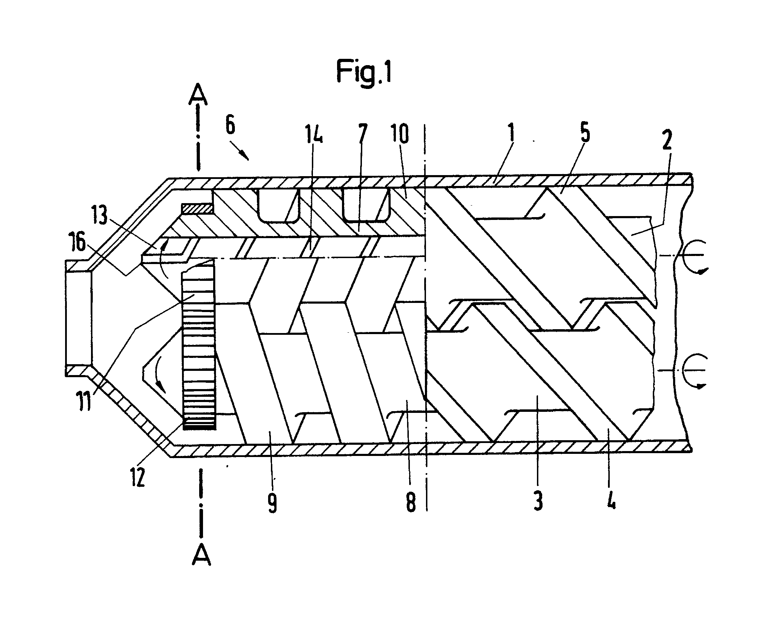

In einem ersten Anführungsbeispiel ist in Figur 1 ein aufgeschnittenes Extrudergehäuse 1 dargestellt, in dem im der Ausstoßzone 6 vorgelagerten Extruderbereich zwei Extruderschnecken 2, 3 gleichläufig miteinander kämmen.

In der Ausstoßzone 6 des Extruders ist die erste Extruderschnecke 2 als freitragende Lagerwelle 13 ausgebildet, auf der eine mit Schnekkenstegen 10 versehene Hülse 7 um ihre Längsachse drehbar aufgesteckt ist. Die Schneckenstege 10 dieser Hülse 7 haben eine entgegengesetzte Steigung und eine größere Breite als die Schneckenstege 5 der Extruderschnecke 2.

Die zweite Extruderschnecke 3 ist in die Ausstoßzone 6 hinein um ein Schneckensegment 8 verlängert, welches Schneckenstege 9 aufweist, die bezüglich ihrer Stegbreite den Schneckenstegen 10 entsprechen, und über eine geringere Steigung verfügen als die stromaufwärtigen Stege 4 der Schnecke 3. Die Schneckenstege 9, 10 des Schneckensegments 8 sowie der Schneckenhülse 7 kämmen dicht und gegenläufig miteinander. Die Pfeile markieren ihre Drehrichtung.

Sowohl die Schneckenhülse 7 als auch das Schneckensegment 8 tragen jeweils an ihren stromabwärtigen Enden miteinander kämmende Ritzel 11, 12, so daß die Schneckenhülse 7 durch die Extruderschnecke 3 über deren Schneckensegment 8 und über die Ritzel 12, 11 antreibbar ist.

In einer vorteilhaften Ausgestaltung dieses Ausführungsbeispiels wird die Schneckenhülse 7 bei ihrer Rotation auf der Lagerwelle 13 mit aus dem Extruder entnommener Schmelze als Schmiermittel versorgt. An der in ihren oberen Hälften geschnittenen Schneckenhülse 7 bzw. Lagerwelle 13 ist eine wendelförmige Schmiermittelnut 14 erkennbar, die in der Oberfläche der Lagerwelle 13 eingelassen ist. Die Schmelze wird der Schmiermittelnut 14 durch eine Bohrung 16 in der Lagerwelle 13 zugeführt, die ihren Schmiermitteleingang am stromabwärtigen Ende der Lagerwelle 13 hat und stromaufwärts in der Nut 14 endet.

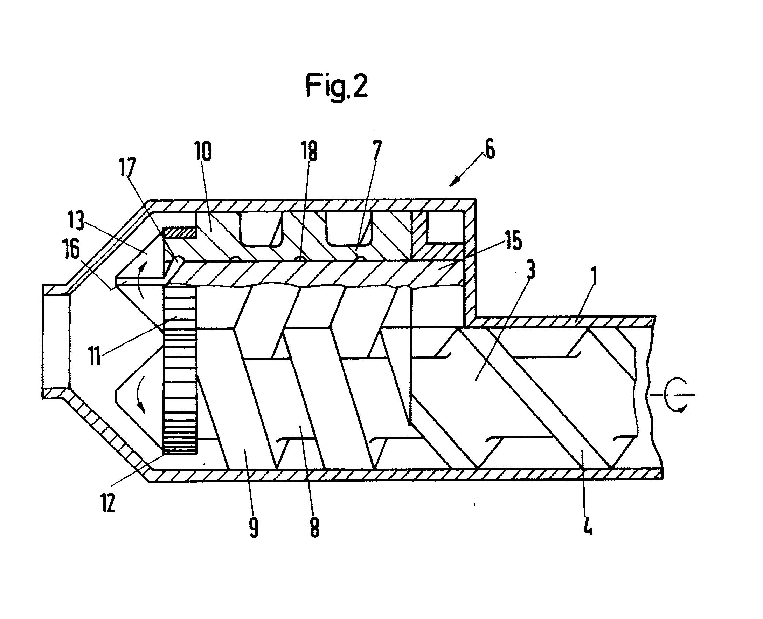

In Figur 2 ist dargestellt, daß auch ein Einschneckenextruder mit der erfindungsgemäßen Schmelzepumpe ausstattbar ist. In einem aufgeschnitten dargestellten Extrudergehäuse 1 rotiert dabei eine Extruderschnecke 3 mit Schneckenstegen 4. Im Bereich der Ausstoßzone 6 des Extruders verfügt die Extruderschnecke 3 über ein Schneckensegment 8, dessen Schneckenstege 9 sich in Steigung und Breite von denen in der stromaufwärts benachbarten Extruderzone unterscheiden.

Das Extrudergehäuse 1 weist in der Ausstoßzone 6 eine zweite Bohrung zur Aufnahme einer weiteren Schnecke auf. Diese Schnecke ist als Schneckenhülse 7 ausgebildet, die um ihre Längsachse drehbar auf eine mit dem Gehäuse verbundenen, frei tragenden Lagerwelle 15 aufgesteckt ist.

Die Stege 10 der Schneckenhülse 7 haben die gleiche Breite wie die Stege 9 des Schneckensegments 8 der Extruderschnecke 3, wenngleich ihre Steigung entgegengesetzt gerichtet ist.

Die Schneckenhülse 7 verfügt an ihrem stromabwärtigen Ende über ein Ritzel 11, welches mit einem Ritzel 12 kämmt, das auf dem stromabwärtigen Ende des Schneckensegments 8 befestigt ist.

Mit Hilfe dieser Ritzel 11, 12, ist die Schnekkenhülse 7 direkt von der Extruderschnecke 3 über ihr Schneckensegment 8 antreibbar. Durch die gegenläufige Rotation der Schneckenhülse 7 und ihrer dem Schneckensegment 8 entgegengesetzten Stegsteigung arbeitet sie zusammen mit dem Schneckensegment 8 als hochwirksame und die Schmelze thermisch nur gering belastende Schmelzepumpe.

Ebenso wie in der vorherigen Ausführungsform wird die Schneckenhülse 7 durch Schmelze aus dem Extruder bei ihrer Rotation auf der Lagerwelle 15 geschmiert. In diesem Beispiel befindet sich die wendelförmige Schmiermittelnut 18 aber auf der Innenseite der Schneckenhülse 7, die über eine Bohrung 16 in der Lagerwelle 15 mit Schmelze gespeist wird. Auch hier liegt eine Bohrungsöffnung auf der stromabwärtigen Stirnseite der Lagerwelle 15. Die zweite Bohrungsöffnung liegt stromaufwärts gegenüber einer mit der wendelförmigen Schmiermittelnut 18 verbundenen Ringnut 17.

In einer einfacheren Bauform ist die Schmiermittelnut 14, 18 bis zum stromabwärtigen Ende der Schneckenhülse 7 bzw. der Lagerwelle 13 weitergeführt, so daß Schmelze direkt in die Nut 14, 18 eintreten kann.

In einer besonders vorteilhaften Ausgestaltung der Erfindung entspricht die Länge des Schneckensegments 8 sowie der Schneckenhülse 7 wenigstens dem 1,5-fachen der Schneckensteigung im Bereich der Ausstoßzone 6. Zudem ist, wie in Figur 2 dargestellt, der Durchmesser der Ritzel 11, 12 kleiner als der Durchmesser der Schnecken in der Ausstoßzone 6.

**Bezugszeichenliste:**

| | | |
|---|---|---|
| 1 | = | Extrudergehäuse |
| 2 | = | Förderschnecke |
| 3 | = | Förderschnecke |
| 4 | = | Schneckensteg |
| 5 | = | Schneckensteg |
| 6 | = | Ausstoßzone |
| 7 | = | Schneckenhülse |
| 8 | = | Schneckensegment |
| 9 | = | Schneckensteg |
| 10 | = | Schneckensteg |
| 11 | = | Ritzel |
| 12 | = | Ritzel |
| 13 | = | Lagerwelle |
| 14 | = | Schmiermittelnut |
| 15 | = | Lagerwelle |
| 16 | = | Bohrung |
| 17 | = | Ringnut |
| 18 | = | Schmiermittelnut |

**Patentansprüche**

1. Zweischneckenextruder zur Verarbeitung von thermoplastischem Kunststoff oder Kautschuk mit einem in eine Einzugs-, Druckaufbau- und eine Ausstoßzone aufteilbarem Gehäuse, in dem Extruderschnecken gleichläufig rotierend angeordnet sind,

   **dadurch gekennzeichnet,**

   daß eine erste Extruderschnecke (2) im Bereich der Ausstoßzone (6) als Lagerwelle (13) ausgebildet ist, daß auf dieser Lagerwelle (13) eine Schneckenhülse (7) um ihre Längsachse gegenläufig drehbar aufgesteckt ist, daß die Schneckenhülse (7) Schneckenstege (10) aufweist, die mit Schneckenstegen (9) eines Schneckensegments (8) der zweiten Extruderschnecke (3) dicht kämmen, und daß die derart in der Ausstoßzone (6) des Extruders zusammenwirkenden Schnecken als gegenläufige Schmelzepumpe betreibbar sind.

2. Einschneckenextruder zur Verarbeitung von thermoplastischem Kunststoff oder Kautschuk mit einem in eine Einzugs-, Druckaufbau- und eine Ausstoßzone aufteilbarem Gehäuse,

**dadurch gekennzeichnet,**

daß in der Ausstoßzone (6) eine Lagerwelle (15) mit dem Extrudergehäuse (1) verbunden ist,

daß auf dieser Lagerwelle (15) eine Schneckenhülse (7) um ihre Längsachse gegenläufig drehbar aufgesteckt ist, daß die Schneckenhülse (7) Schneckenstege (10) aufweist, die mit Schneckenstegen (9) eines Schneckensegments (8) der Extruderschnecke (3) dicht kämmen, und daß die derart in der Ausstoßzone (6) des Extruders zusammenwirkenden Schnecken als gegenläufige Schmelzepumpe betreibbar sind.

3. Extruder gemäß den Ansprüchen 1 und 2,

**dadurch gekennzeichnet,**

daß die Schneckenhülse 7 an ihrem stromabwärtigen Ende ein Antriebsritzel (11) trägt, welches mit einem Ritzel (12) auf der zweiten Extruderschnecke (3) kämmt.

4. Extruder gemäß den Ansprüchen 1 und 2,

**dadurch gekennzeichnet,**

daß in der Ausstoßzone (6) die Steigung der Extruderschnekken kleiner und die Stegbreite größer ist, als in der stromaufwärts benachbarten Extruderzone.

5. Extruder gemäß den Ansprüchen 1 und 3 bis 4,

**dadurch gekennzeichnet,**

daß die Schneckenhülse (7) und das Schneckensegment (8) in der Ausstoßzone (6) mit den Extruderschnecken (2, 3) bzw. dem Extrudergehäuse (1) austauschbar verbunden sind.

6. Extruder gemäß Anspruch 3,

**dadurch gekennzeichnet,**

daß der Durchmesser der Ritzel (11, 12) kleiner ist als der Durchmesser der Schneckenhülse (7) und des Schneckensegmentes (8) in der Ausstoßzone (6).

7. Extruder gemäß den Ansprüchen 1 bis 6,

**dadurch gekennzeichnet,**

daß die Länge der Schneckenhülse (7) und des Schneckensegmentes (8) in der Ausstoßzone wenigstens dem 1,5-fachen der Schneckensteigung entspricht.

8. Extruder gemäß den Ansprüchen 1 bis 7,

**dadurch gekennzeichnet,**

daß die Schneckenhülse (7) auf ihrer Innenseite eine wendelförmige Schmiermittelnut (18) aufweist, die an ihrem stromabwärtigen Ende in eine Ringnut (17) übergeht.

9. Extruder gemäß dem Anspruch 8,

**dadurch gekennzeichnet,**

daß die Ringnut (17) über eine axiale Schmiermittelbohrung (16) in der Lagerwelle (15) gespeist wird, die stromaufwärts gegenüber der Ringnut (17) endet und stromabwärts in den stromabwärtigen Teil der Ausstoßzone (6) mündet.

10. Extruder gemäß den Ansprüchen 1 bis 9,

**dadurch gekennzeichnet,**

daß die Lagerwelle (13) an ihrer Außenseite eine wendelförmige Schmiermittelnut (14) aufweist, deren stromabwärtiges Ende in eine axiale Bohrung (16) der Lagerwelle (13) übergeht, die in den stromabwärtigen Teil der Extruderausstoßzone (6) mündet.

11. Extruder gemäß den Ansprüchen 8 und 9,

**dadurch gekennzeichnet,**

daß die Schmiermittelnut (14, 18) bis zum stromabwärtigen Ende der Schneckenhülse (3) bzw. der Lagerwelle (13) weitergeführt ist.

12. Extruder gemäß der Ansprüche 1 und 2,

**dadurch gekennzeichnet,**

daß die Lagerwelle (15) freitragend mit dem Extrudergehäuse (1) verbunden ist.

# Fig.1

Fig.2

# Fig.3